# EUROPÄISCHE PATENTANMELDUNG

(11) **EP 1 264 989 A1**
(43) Veröffentlichungstag der Anmeldung: **11.12.2002**
(21) Anmeldenummer: 02011317.1
(22) Anmeldetag: 23.05.2002
(51) Int. Cl.: F15B 1/02, A01B 63/10

(54) **Entlastungsvorrichtung für eine Hubeinrichtung**

(30) Priorität: 07.06.2001 DE 10127486
(71) Anmelder: CLAAS Selbstfahrende Erntemaschinen GmbH, 33428 Harsewinkel (DE)
(72) Erfinder: Strieker, Norbert, 33334 Gütersloh (DE)

(57) **Zusammenfassung**

Die Erfindung betrifft eine Entlastungsvorrichtung (23) für eine Hubeinrichtung (32) mit zumindest einem fluidbetätigtem Huborgan (6, 7), dessen wenigstens eine fluidführende Leitung (13) über zumindest ein Steuerglied (15) das fluidbetätigte Huborgan (6, 7) mit einer Druckspeichereinheit (21) verbindet, wobei das zumindest eine Steuerglied (15) von wenigstens einem in Durchlassrichtung das fluidbetätigte Huborgan (6, 7) mit der Druckspeichereinheit (21) verbindenden Rückschlagventil (16) und einem zu diesem Rückschlagventil (16) parallel geschalteten in Durchlassrichtung die Druckspeichereinheit (21) mit dem fluidbetätigten Huborgan (6, 7) verbindenden Schaltventil (17, 26) gebildet wird. Auf diese Weise wird sichergestellt, dass das wenigstens eine Huborgan (6, 7) der Hubeinrichtung (32) permanent in Wirkverbindung mit der Druckspeichereinheit (21) steht, sodass Druckspitzen im Leitungssystem (13, 18) der Hubeinrichtung (32) permanent abgebaut werden können.

## Beschreibung

Die Erfindung betrifft eine Entlastungsvorrichtung für eine Hubeinrichtung mit zumindest einem Huborgan gemäß dem Oberbegriff des Anspruchs 1.

Derartige Entlastungsvorrichtungen kommen vorrangig dort zum Einsatz, wo die mit der Hubeinrichtung zu bewegenden Lasten erheblichen Schwingungen unterliegend, die zu einer hohen Stoßbelastung der Hubeinrichtung und des die Hubeinrichtung aufnehmenden Trägerfahrzeugs führen können. Aus der deutschen Patentschrift DE 28 56 583 ist eine Entlastungsvorrichtung für den Dreipunktanbau eines Schleppers bekannt geworden, bei der in Abhängigkeit von der Fahrgeschwindigkeit eine Dämpfung der Nickbewegung des von der Dreipunktanbauvorrichtung aufgenommenen Anbaugerätes erfolgt. Der wesentliche Nachteil dieser Ausführung ist, dass die Dämpfung der Schwingbewegung des Anbaugerätes erst bei höheren Fahrgeschwindigkeiten erfolgt, wobei die sich schwingbewegungsabhängig im Hydrauliksystem aufbauenden Druckspitzen über einen Drosselquerschnitt und einen diesem Drosselquerschnitt nachgeschalteten Druckspeicher abgebaut werden. Drosselquerschnitte sind zudem ungeeignet, Druckspitzen in sehr kurzer Zeit abzubauen, sodass die schwingungsabhängige Belastungen der Hubeinrichtung und des Trägerfahrzeugs dennoch sehr hoch sein kann. In einer Ausführung nach der DE 196 22 762 wird die Dämpfung der Schwingbewegung einer Hubeinrichtung in Abhängigkeit von der Stellung der Hubvorrichtung zu- oder abgeschaltet. Um Druckspitzen schnell abbauen zu können, ist der Druckspeicher bei zugeschalteter Dämpfung direkt mit der Druckseite des Hubzylinders verbunden, sodass auftretende Druckspitzen ohne Überwindung eines Drosselquerschnitts direkt in den Druckspeicher geleitet und abgebaut werden. Auch bei einer derartigen Ausführung wird die Schwingbewegung der Hubeinrichtung nicht permanent gedämpft. Bei nicht zugeschalteter Dämpfung können auftretende Lastspitzen nur über einen Drosselquerschnitt in den Druckspeicher abgeführt werden. Aufgrund des zu überwindenden Drosselquerschnitts ist die Dämpfung von Lastspitzen bei dieser Schaltstellung unzureichend.

Der Erfindung liegt deshalb die Aufgabe zugrunde, eine Entlastungsvorrichtung für eine Hubeinrichtung der eingangs genannten Art so weiterzuentwickeln, dass an der Hubeinrichtung auftretende Lastspitzen permanent abgebaut werden können, um den belastungsabhängigen Verschleiß der Hubeinrichtung und des die Hubeinrichtung aufnehmenden Trägerfahrzeugs zu reduzieren.

Erfindungsgemäß wird die Aufgabe durch eine Entlastungsvorrichtung für eine Hubeinrichtung mit den kennzeichnenden Merkmalen des Anspruchs 1 gelöst.

Indem zwischen der Druckspeichereinheit und dem Huborgan zumindest ein Steuerglied zwischengeschaltet ist, welches von wenigstens einem in Durchlassrichtung das fluidbetätigte Huborgan mit der Druckspeichereinheit verbindenden Rückschlagventil und einem zu diesem Rückschlagventil parallel geschalteten in Durchlassrichtung die Druckspeichereinheit mit dem fluidbetätigten Huborgan verbindenden Schaltventil gebildet wird, ist sichergestellt, dass das wenigstens eine Huborgan der Hubeinrichtung permanent in Wirkverbindung mit dem Druckspeicher steht. Auf diese Weise können schwingungsbedingte Druckspitzen im Leitungssystem der Hubeinrichtung auf konstruktiv einfache Weise in die Druckspeichereinheit abgeführt werden, wobei nach dem Abbau der Druckspitze in der Druckspeichereinheit, dass energieübertragende Medium über das Schaltventil dem Huborgan wieder zugeführt werden kann. Zudem wird durch die permanente Verbindung zwischen Druckspeichereinheit und Huborgan sichergestellt, dass der Druck in der Speichereinheit nie geringer sein kann als der im Leitungssystem des oder der Huborgane, sodass ein ungewolltes Absinken der Hubeinrichtung aufgrund eines niedrigeren Drucks in der zuzuschaltenden Speichereinheit im Moment ihrer Zuschaltung in das Leitungssystem der Huborgane nicht auftreten kann.

Ein nahezu zeitgleicher Abbau von Druckspitzen wird dann erreicht, wenn das Rückschlagventil im Wesentlichen drosselfrei arbeitet. Eine Dämpfung der Schwingbewegung der Hubeinrichtung wird auf konstruktiv einfache Weise dadurch erreicht, dass der Durchfluss des energieübertragenden Mediums von der Druckspeichereinheit zu dem fluidbetätigtem Huborgan über einen Drosselquerschnitt erfolgt.

Auf konstruktiv einfache Weise kann das Schaltventil des erfindungsgemäßen Steuergliedes als 2/2-Wegeventil ausgeführt sein, dass in Durchlassstellung die Speichereinheit mit dem Huborgan verbindet und in Sperrstellung unterbricht, sodass die Dämpfung der Schwingbewegung der Hubeinrichtung wahlweise zu- oder abgeschaltet werden kann. Eine Abschaltung könnte vor allem dann von Vorteil sein, wenn das von der landwirtschaftlichen Arbeitsmaschine aufgenommene Vorsatzgerät im sogenannten Autokonturbetrieb betrieben wird und ein zu häufiger Abbau von Druckspitzen die Funktionsweise des Autokonturbetriebes stören würde. Durch das mögliche Abschalten der Dämpfung kann somit neben einem störungsfreien Autokonturbetrieb stets sichergestellt werden, dass hohe Belastungsspitzen unabhängig von der Betriebsart dennoch abbaubar sind.

In vorteilhafter Weiterbildung der Erfindung kann das 2/2 Wegeventil in der Weise gesteuert sein, dass das aufgrund von Druckspitzen über das Rückschlagventil abfließende Medium über das 2/2-Wegeventil dem oder den Huborganen wieder zugeführbar ist, wobei sich in der Speichereinheit wieder das ursprüngliche Druckniveau einstellt.

Eine optimale Aufnahme von Druckspitzen bei gleichzeitiger Dämpfung der Nickbewegung der Hubeinrichtung wird dann erreicht, wenn das Rückschlagventil des erfindungsgemäßen Steuergliedes drosselfrei arbeitet und der zur Schwingungsdämpfung vorgesehene Drosselquerschnitt in der Verbindungsleitung zwischen Druckspeicher und fluidbetätigtem Huborgan angeordnet ist. Auf konstruktiv besonders einfache Weise kann dies bei Verwendung eines Wegeventils dadurch erreicht werden, dass der Durchflussquerschnitt des Wegeventils als Drosselquerschnitt ausgebildet ist.

In einer vorteilhaften Weiterbildung der Erfindung kann das Schaltventil des erfindungsgemäßen Steuergliedes auch als Druckbegrenzungsventil ausgebildet sein, welches in der Nullstellung den wenigstens einen Druckspeicher mit dem Druckraum des fluidbetätigten Huborgans verbindet und in der Schaltstellung unterbricht, sodass die Dämpfung der Schwingbewegung der Hubeinrichtung ebenfalls wahlweise zu- oder abgeschaltet werden kann, wobei im abgeschalteten Zustand dennoch dafür gesorgt ist, dass zur Vermeidung von Überlastungen des Druckspeichers dass Druckbegrenzungsventil bei einem bestimmten Grenzdruck automatisch öffnet.

In vorteilhafter Weiterbildung der Erfindung kann das Druckbegrenzungsventil ebenfalls gesteuert sein. Dies ermöglicht in gleicher Weise wie beim Einsatz von gesteuerten Wegeventilen, dass das aufgrund von Druckspitzen über das Rückschlagventil abfließende Medium über das Druckbegrenzungsventil dem oder den Huborganen wieder zuführbar ist und sich in der Speichereinheit wieder das ursprüngliche Druckniveau einstellt.

Um ebenfalls beim Einsatz von Druckbegrenzungsventilen eine optimale Aufnahme von Druckspitzen bei gleichzeitiger Dämpfung der Nickbewegung der Hubeinrichtung zu gewährleisten, arbeitet das Rückschlagventil des erfindungsgemäßen Steuergliedes drosselfrei während der zur Schwingungsdämpfüng vorgesehene Drosselquerschnitt in der Verbindungsleitung zwischen Druckspeicher und fluidbetätigtem Huborgan angeordnet ist. Auf konstruktiv besonders einfache Weise kann dies bei Verwendung eines Druckbegrenzungsventils dadurch erreicht werden, dass der Zulaufleitung zum Druckbegrenzungsventil ein Drosselquerschnitt zugeordnet ist.

Eine besonders flexible Anpassung des Drucks der Speichereinheit an den mittleren Arbeitsdruck des oder der Huborgane kann dann erreicht werden, wenn das Schaltventil des erfindungsgemäßen Steuergliedes als Proportionalventil ausgeführt ist.

Um auch bei hohen durch die Speichereinheit aufzunehmenden Druckspitzen eine Überlastung der Speichereinheit zu vermeiden, kann die Speichereinheit in vorteilhafter Weiterbildung der Erfindung von einer Vielzahl parallel geschalteter Einzeldruckspeicher gebildet werden.

In konstruktiv einfachster Weise können die fluidbetätigten Huborgane der erfindungsgemäßen Hubeinrichtung als hydraulisch betätigte Hubzylinder ausgeführt sein.

In besonders vorteilhafter Weise kann die erfindungsgemäße Entlastungsvorrichtung an solchen landwirtschaftlichen Arbeitsmaschinen eingesetzt werden, deren Arbeitsorgane von fluidbetätigten Huborganen in verschiedenen Positionen in vertikaler Richtung festlegbar sind, wobei die Arbeitsorgane in Abhängigkeit von der Fahrgeschwindigkeit der landwirtschaftlichen Arbeitsmaschine und der zu überfahrenden Bodenkontur zu mehr oder weniger intensiven Nickbewegungen neigen. Hier sorgt die erfindungsgemäße Entlastungsvorrichtung in besonders vorteilhafter Weise dafür, dass die nickbewegungsabhängig auf die landwirtschaftliche Arbeitsmaschine übertragenen Stoßbelastungen erheblich reduziert werden können.

Weitere vorteilhafte Ausgestaltungen sind Gegenstand weiterer Unteransprüche und werden nachfolgend anhand von Zeichnungen näher erläutert.

Es zeigen:
- Figur 1: eine erfindungsgemäße Entlastungsvorrichtung für eine Hubeinrichtung mit 2/2-Wegeventil
- Figur 2: eine erfindungsgemäße Entlastungsvorrichtung für eine Hubeinrichtung mit Druckbegrenzungsventil

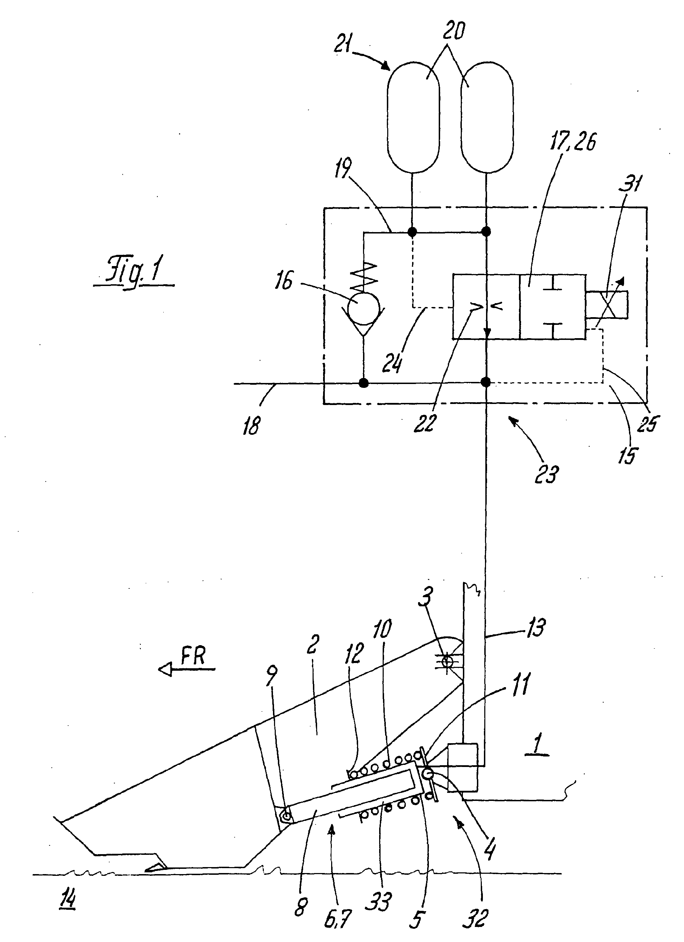

Figur 1 zeigt schematisch eine landwirtschaftliche Arbeitsmaschine 1, die an ihrem in Fahrtrichtung FR weisenden frontseitigen Ende ein nicht näher dargestelltes landwirtschaftliches Vorsatzgerät 2 um eine quer zur Fahrtrichtung FR weisende Achse 3 schwenkbar aufnimmt. Unterhalb der das landwirtschaftliche Vorsatzgerät 2 drehbar aufnehmenden Schwenkachse 3 ist der landwirtschaftlichen Arbeitsmaschine 1 wenigstens eine weitere quer zur Fahrtrichtung FR weisende Schwenkachse 4 gestellfest zugeordnet. Die wenigstens eine weitere Schwenkachse 4 nimmt im dargestellten Ausführungsbeispiel den Kolben 5 eines als einfach wirkender Hubzylinders 6 ausgeführten Huborgans 7 auf, dessen Kolbenstange 8 über eine quer zur Fahrtrichtung FR weisende Achse 9 drehbar mit dem landwirtschaftlichen Vorsatzgerät 2 verbunden ist. In an sich bekannter Weise kann der wenigstens eine Hubzylinder 6 im Bereich seines Kolbens 5 von einer Entlastungsfeder 10 umschlossen werden, die trägerfahrzeugseitig mit einem Anschlag 11 in Wirkverbindung steht und vorsatzgeräteseitig von einem den Kolben 5 umgreifenden und in der Regel in seiner Lage am Kolben 5 veränderbaren Anschlag 12 begrenzt wird. An den Kolben 5 des Hubzylinders 6 ist einenends eine Versorgungsleitung 13 angeschlossen über die der Hubzylinder 6 druckbeaufschlagt oder druckentlastet werden kann. Wird dem Hubzylinder 6 über die Versorgungsleitung 12 ein energieübertragendes Medium zugeführt, wird die Kolbenstange 8 aus dem Kolben 5 herausgeschoben und das mit der Kolbenstange 8 gelenkig verbundene landwirtschaftliche Vorsatzgerät 2 verschwenkt um die am Trägerfahrzeug 1 angeordnete Schwenkachse 3 in vertikaler Richtung nach oben. Wird die Versorgungsleitung 13 in an sich bekannter Weise druckentlastet bewegt das Vorsatzgerät 2 durch Schwerkraftwirkung die Kolbenstange 8 wieder in den Kolben 5 hinein und das Vorsatzgerät 2 schwenkt nun entgegen dem Uhrzeigersinn um die am Trägerfahrzeug 1 angeordnete Schwenkachse 3 in Richtung Boden 14 zurück. Während das Vorsatzgerät 2 in der Arbeitsstellung gemäß Figur 1 unmittelbar über dem Boden 14 geführt wird, kann es in der Transportstellung von dem wenigstens einen druckbeaufschlagten Hubzylinder 6 in beliebigen bodenfernen Positionen gehalten werden. In Abhängigkeit von der Unebenheit des Bodens 14 und der Fahrgeschwindigkeit des Trägerfahrzeugs 1 führt das Vorsatzgerät 2 Nickbewegungen aus, die in dem wenigstens einen Hubzylinder 6 zu kurzzeitigen Druckanstiegen führen, die unter anderem als Stoßbelastungen im Bereich der gestellfesten Schwenkachse 4 in das Trägerfahrzeug 1 eingeleitet werden. Um diese Stoßbelastungen zu reduzieren, ist in die fluidführende Leitung 13 des wenigstens einen Huborgans 7 ein erfindungsgemäßes und noch näher zu beschreibendes Steuerglied 15 eingeschaltet. Das Steuerglied 15 wird in einem ersten Ausführungsbeispiel nach Figur 1 von einem Rückschlagventil 16 und einem 2/2-Wegeventil 17 gebildet, wobei das Rückschlagventil 16 und das 2/2-Wegeventil 17 in Parallelschaltung zueinander und zu dem wenigstens einen Hubzylinder 6 angeordnet sind. Über eine in an sich bekannter und deshalb nicht näher dargestellter Weise mit dem Hydraulikkreislauf des Trägerfahrzeugs 1 verbundene Zu- und Ablaufleitung 18 wird das erfindungsgemäße Steuerglied 15 und der wenigstens eine Hubzylinder 6 über dessen wenigstens eine Versorgungsleitung 13 druckbeaufschlagt und druckentlastet. Die nicht mit der Zu- und Ablaufleitung 18 verbundenen nicht näher dargestellten Anschlüsse des Rückschlagventils 16 und des 2/2-Wegeventils 17 sind über ein Leitungssystem 19 miteinander und mit einer aus zwei parallel geschalteten Einzeldruckspeichern 20 bestehenden Druckspeichereinheit 21 verbunden. Es liegt im Rahmen der Erfindung, dass die Druckspeichereinheit 21 auch von nur einem Einzeldruckspeicher 20 oder einer Vielzahl von Einzeldruckspeichern 20 gebildet werden kann. Das Rückschlagventil 16 verbindet die Zu- und Ablaufleitung 18 mit dem Leitungssystem 19 in der Weise, dass das energieübertragende Medium der Zu- und Ablaufleitung 18 das Rückschlagventil 16 nur in Richtung des Leitungssystems 19 und damit in Richtung Druckspeichereinheit 21 und 2/2-Wegeventil 17 durchströmen kann. Das 2/2-Wegeventil 17 ist so ausgeführt, dass es in einer ersten Schaltstellung (Fig. 1), der Durchlassstellung, das Leitungssystem 19 mit der Zu- und Ablaufleitung 18 und der Versorgungsleitung 13 des Hubzylinders 6 verbindet, wobei das energieübertragende Medium in dieser Schaltstellung von dem Leitungssystem 19 und damit von der Druckspeichereinheit 21 und dem Rückschlagventil 16 in die Zu- und Ablaufleitung 18 und die Versorgungsleitung 13 des Hubzylinders 6 strömt. In einer zweiten Schaltstellung, der Sperrstellung, unterbricht das 2/2-Wegeventil 17 die Verbindung zwischen dem Leitungssystem 19 sowie der Zu- und Ablaufleitung 18 und der Versorgungsleitung 13. In der in Figur 1 dargestellten Arbeitsstellung des Vorsatzgerätes 2 kann es aufgrund von Bodenunebenheiten dazu kommen, dass eine an der Kolbenstange 8 angreifende Reaktionskraft bestrebt ist die Kolbenstange 8 in den Kolben 5 des Hubzylinders 6 zu schieben, wobei es zu einem Druckanstieg in der Versorgungsleitung 13 und der Zu- und Ablaufleitung 18 kommt. Sind die auftretenden Druckspitzen entsprechend groß, öffnet das Rückschlagventil 16, sodass die im energieübertragenden Medium aufgetretene Druckspitze über die Druckspeichereinheit 21 abgebaut werden kann. Befindet sich das 2/2-Wegeventil 17 zu diesem Zeitpunkt in Durchlassstellung, kann die Menge des über das Rückschlagventil 16 abgeflossenen energieübertragenden Mediums dem Hubzylinder 6 wieder zugeführt werden, wobei der Durchlassquerschnitt im 2/2-Wegeventil 17 zur Schwingungsdämpfung als Drosselquerschnitt 22 ausgeführt ist. Die gleiche Funktionsweise wird erzielt, wenn das Vorsatzgerät 2 von dem wenigstens einen Hubzylinder 6 in einer beliebigen bodenfernen Position gehalten wird und das Vorsatzgerät 2 aufgrund der Fahrgeschwindigkeit des Trägerfahrzeugs 1 mehr oder weniger intensive Nickbewegungen ausführt, die ebenfalls Druckspitzen in der Versorgungsleitung 13 des Hubzylinders 6 verursachen. Wird das 2/2-Wegeventil 17 in Sperrstellung betrieben, kann das über das Rückschlagventil 16 abgeführte Medium dem Hubzylinder 6 nicht wieder zugeführt werden. Dies führt zu einer allmählichen Aufladung der Druckspeichereinheit 21, sodass das Rückschlagventil 16 gegen einen zunehmenden Druck im Leitungssystem 19 öffnen muss. Auf diese konstruktiv sehr einfache Weise kann erreicht werden, dass das erfindungsgemäße Steuerglied 15 seltener und nur hohe Druckspitzen abbaut. Dies hat vor allem den Vorteil, dass das in der Regel bodenkopierend im sogenannten Autokonturbetrieb arbeitende landwirtschaftliche Vorsatzgerät 2 nicht bereits bei kleinen Bodenunebenheiten in der erfindungsgemäßen Entlastungsvorrichtung 23 Schaltvorgängen auslöst, was zu übermäßiger Erwärmung und erhöhten Energieverlusten in der erfindungsgemäßen Entlastungsvorrichtung 23 führen würde. Damit die allmähliche Aufladung der Druckspeichereinheit 21 nicht zu deren Überlastung führt oder das Rückschlagventil 16 letztlich nicht mehr den im Leitungssystem 19 anliegenden Systemdruck überwinden kann, kann das 2/2-Wegeventil 17 als vorgesteuertes 2/2-Wegeventil 17 ausgeführt sein, welches über Steuerleitungen 24, 25 mit dem Leitungssystem 19 der Druckspeichereinrichtung 21 und der Versorgungsleitung 13 des wenigstens einen Hubzylinders 6 verbunden ist. In Abhängigkeit von der Druckdifferenz in diesen Leitungssystemen 13, 19 kann so auf einfache Weise dafür gesorgt werden, dass das in Sperrstellung betriebene 2/2-Wegeventil 17 immer dann selbsttätig in Durchlassstellung umschaltet, wenn der Druck im Leitungssystem 19 der Druckspeichereinheit 21 einen voreinstellbaren Grenzwert überschreitet. Aufgrund der Parallelschaltung des Rückschlagventils 16 und des 2/2-Wegeventils 17 ist unabhängig von der momentanen Schaltstellung des 2/2-Wegeventils 17 stets sichergestellt, dass der Druck im Leitungssystem 19 der Druckspeichereinheit 21 nicht niedriger sein kann als der Druck in den Leitungssystemen 13, 18 sowie dem Druckraum 33 des wenigstens einen Hubzylinders 6.

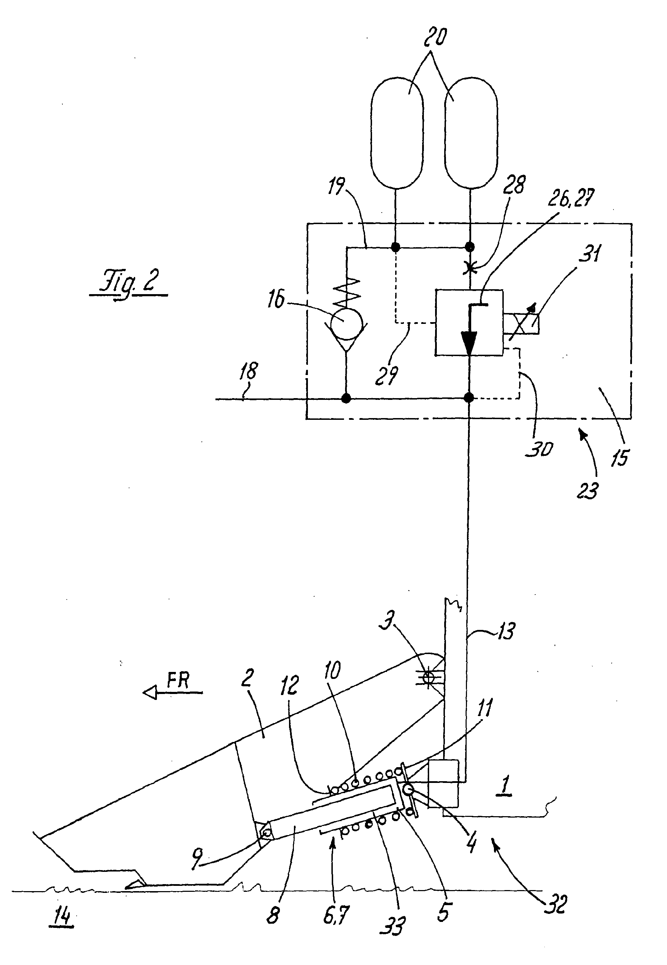

In einer weiteren vorteilhaften Ausgestaltung der Erfindung kann das als 2/2-Wegeventil 17 ausgeführte Schaltventil 26 auch als Druckbegrenzungsventil 27 ausgeführt sein, wobei das Druckbegrenzungsventil 27, wie in Figur 2 dargestellt, ebenfalls in Durchlassstellung oder in Sperrstellung betrieben werden kann um die bereits beschriebenen Effekte zu erzielen. Zudem kann dem Druckbegrenzungsventil 27 eine Drossel 28 zugeordnet sein, so dass das mit hohem Druck und hoher Geschwindigkeit über das Rückschlagventil 16 in die Druckspeichereinheit 21 abgeführte Öl mit niedrigerem Druck und verzögert, also gedämpft, dem wenigstens einen Hubzylinder 6 wieder zugefährt wird. Ferner kann dass Druckbegrenzungsventil 27 ebenfalls über Steuerleitungen 29, 30 mit dem Leitungssystem 19 der Druckspeichereinheit 21 und der Versorgungsleitung 13 sowie dem Druckraum 33 des wenigstens einen Hubzylinders 6 verbunden sein, sodass ebenfalls eine druckdifferenzabhängige Öffnung oder Schließung des Druckbegrenzungsventils 27 mit dem Effekt erreicht werden kann, dass die Druckspeichereinheit 21 nicht überlastet wird und das Rückschlagventil 16 stets gegen den im Leitungssystem 19 der Druckspeichereinheit 21 anliegenden Systemdruck zum Abbau von Druckspitzen öffnen kann.

Um den Schaltvorgang des Schaltventils 26 der erfindungsgemäßen Entlastungsvorrichtung 23 an beliebige Druckdifferenzen zwischen dem Leitungssystem 19 und der Versorgungsleitung 13 sowie dem Druckraum 33 des wenigstens einen Hubzylinders 6 stufenlos anpassen zu können, kann das jeweilige Schaltventil 17, 26, 27 auch als Proportionalventil 31 ausgeführt sein.

Es liegt im Rahmen der Erfindung, dass die erfindungsgemäße Hubeinrichtung 32 über eine Vielzahl von Huborganen 7 verfügen kann, wobei alle Huborgane 7 zumindest über eine erfindungsgemäße Entlastungsvorrichtung 23 verfügen um die beschriebenen Effekte zu erzielen. Ferner kann das als einfach wirkender Hubzylinder 6 ausgeführte Huborgan 7 auch von einem oder mehreren an sich bekannten und deshalb nicht näher dargestellten doppelt wirkenden Hubzylinder gebildet werden.

### Bezugszeichenliste

- 1: landwirtschaftliche Arbeitsmaschine
- 2: Vorsatzgerät
- 3: Schwenkachse
- 4: Schwenkachse
- 5: Kolben
- 6: Hubzylinder
- 7: Huborgan
- 8: Kolbenstange
- 9: Schwenkachse
- 10: Entlastungsfeder
- 11: Anschlag
- 12: Anschlag
- 13: Versorgungsleitung
- 14: Boden
- 15: Steuerglied
- 16: Rückschlagventil
- 17: 2/2-Wegeventil
- 18: Zu- und Ablaufleitung
- 19: Leitungssystem
- 20: Einzeldruckspeicher
- 21: Druckspeichereinheit
- 22: Drosselquerschnitt
- 23: Entlastungsvorrichtung
- 24: Steuerleitung
- 25: Steuerleitung
- 26: Schaltventil
- 27: Druckbegrenzungsventil
- 28: Drosselquerschnitt
- 29: Steuerleitung
- 30: Steuerleitung
- 31: Proportionalventil
- 32: Hubeinrichtung
- 33: Druckraum

- FR: Fahrtrichtung

## Patentansprüche

1. Entlastungsvorrichtung für eine Hubeinrichtung mit zumindest einem fluidbetätigtem Huborgan, dessen wenigstens eine fluidführende Leitung über zumindest ein Steuerglied das fluidbetätigte Huborgan mit einer Druckspeichereinheit verbindet,
**dadurch gekennzeichnet,**
**dass** das zumindest eine Steuerglied (15) von wenigstens einem in Durchlassrichtung das fluidbetätigte Huborgan (6, 7) mit der Druckspeichereinheit (21) verbindenden Rückschlagventil (16) und einem zu diesem Rückschlagventil (16) parallel geschalteten in Durchlassrichtung die Druckspeichereinheit (21) mit dem fluidbetätigten Huborgan (6, 7) verbindenden Schaltventil (26, 17, 27) gebildet wird.

2. Entlastungsvorrichtung nach Anspruch 1,
**dadurch gekennzeichnet,**
**dass** der Durchfluss des energieübertragenden Mediums vom Rückschlagventil (16) zur Druckspeichereinheit (21) nahezu drosselfrei erfolgt.

3. Entlastungsvorrichtung für eine Hubeinrichtung nach einem oder mehreren der vorhergehenden Ansprüche,
**dadurch gekennzeichnet,**
**dass** der Durchfluss des energieübertragenden Mediums von der Druckspeichereinheit (21) zu dem fluidbetätigtem Huborgan (6, 7) über einen Drosselquerschnitt (22, 28) oder nahezu drosselfrei erfolgt.

4. Entlastungsvorrichtung für eine Hubeinrichtung nach einem oder mehreren der vorhergehenden Ansprüche,
**dadurch gekennzeichnet,**
**dass** das Schaltventil (26) als schaltbares 2/2-Wegeventil (17) ausgeführt ist, wobei das 2/2 Wegeventil (17) in Durchlassstellung den wenigstens einen Druckspeicher (20) mit dem wenigstens einen fluidbetätigten Huborgan (6, 7) verbindet und in Sperrstellung unterbricht.

5. Entlastungsvorrichtung für eine Hubeinrichtung nach Anspruch 4,
**dadurch gekennzeichnet,**
**dass** das 2/2-Wegeventil (17) als vorgesteuertes 2/2 Wegeventil (17) ausgeführt ist, wobei die Vorsteuerfunktion durch die Druckdifferenz zwischen dem wenigstens einen Druckspeicher (20) und dem Druckraum (33) des wenigstens einen Huborgans (6, 7) bestimmt wird.

6. Entlastungsvorrichtung für eine Hubeinrichtung nach einem oder mehreren der vorhergehenden Ansprüche,
**dadurch gekennzeichnet,**
**dass** die Durchlassstellung des 2/2-Wegeventils (17) als Drosselquerschnitt (22) ausgebildet ist.

7. Entlastungsvorrichtung für eine Hubeinrichtung nach einem oder mehreren der vorhergehenden Ansprüche,
**dadurch gekennzeichnet,**
**dass** das Schaltventil (26) als Druckbegrenzungsventil (27) ausgeführt ist, wobei das Druckbegrenzungsventil (27) in Nullstellung den wenigstens einen Druckspeicher (20) mit dem Druckraum (33) des fluidbetätigten Huborgans (6, 7) verbindet und in Schaltstellung zumindest solange unterbricht, bis im Leitungssystem (19) der Druckspeichereinheit (21) ein am Druckbegrenzungsventil (27) voreinstellbarer Grenzdruck erreicht wird.

8. Entlastungsvorrichtung für eine Hubeinrichtung nach Anspruch 7,
**dadurch gekennzeichnet,**
**dass** das Druckbegrenzungsventil (27) als gesteuertes Druckbegrenzungsventil (27) ausgeführt ist, wobei die Steuerfunktion durch die Druckdifferenz zwischen dem wenigstens einen Druckspeicher (10) und dem Druckraum (33) des wenigstens einen Huborgans (6, 7) bestimmt wird.

9. Entlastungsvorrichtung für eine Hubeinrichtung nach einem oder mehreren der vorhergehenden Ansprüche,
**dadurch gekennzeichnet,**
**dass** das Schaltventil (17, 26, 27) als Proportionalventil (31) ausgebildet ist.

10. Entlastungsvorrichtung für eine Hubeinrichtung nach einem oder mehreren der vorhergehenden Ansprüche,
**dadurch gekennzeichnet,**
**dass** die Druckspeichereinheit (21) über eine Vielzahl parallel geschalteter Einzeldruckspeicher (20) verfügt.

11. Entlastungsvorrichtung für eine Hubeinrichtung nach einem oder mehreren der vorhergehenden Ansprüche,
**dadurch gekennzeichnet,**
**dass** das fluidbetätigte Huborgan (6, 7) als hydraulischer Hubzylinder (6) ausgeführt ist.

12. Entlastungsvorrichtung für eine Hubeinrichtung nach einem oder mehreren der vorhergehenden Ansprüche,
**dadurch gekennzeichnet,**
**dass** das wenigstens eine fluidbetätigte Huborgan (6, 7) einenends schwenkbeweglich mit einem als landwirtschaftliche Arbeitsmaschine (1) ausgeführten Trägerfahrzeug verbunden ist und anderenends schwenkbeweglich mit wenigstens einem höhenverstellbaren Arbeitsorgan (2) in Wirkverbindung steht.

13. Entlastungsvorrichtung für eine Hubeinrichtung nach Anspruch 12,
**dadurch gekennzeichnet,**
**dass** das Arbeitsorgan (2) ein Vorsatzgerät zur Ernte und Aufnahme landwirtschaftlicher Erntegüter ist.
